Europäisches Patentamt

European Patent Office

Office européen des brevets

(11) Veröffentlichungsnummer: **0 184 728**
A2

(12) # EUROPÄISCHE PATENTANMELDUNG

(21) Anmeldenummer: 85115138.1

(51) Int. Cl.⁴: **B 32 B 3/12**, B 32 B 5/00

(22) Anmeldetag: 29.11.85

(30) Priorität: 12.12.84 DE 3445283

(43) Veröffentlichungstag der Anmeldung: 18.06.86
Patentblatt 86/25

(84) Benannte Vertragsstaaten: AT BE CH DE FR GB IT LI NL
SE

(71) Anmelder: BAYER AG, Konzernverwaltung RP
Patentabteilung, D-5090 Leverkusen 1 Bayerwerk (DE)

(72) Erfinder: Damsky, Walter, Dipl.-Ing.,
Höninghausstrasse 36, D-4150 Krefeld (DE)
Erfinder: Grömping, Franz, Dipl.-Ing.,
Sebastian-Kneipp-Weg 13, D-4150 Krefeld (DE)
Erfinder: Sajben, Johannes Otto, Dipl.-Ing.,
Bethelstrasse 64, D-4150 Krefeld (DE)
Erfinder: Winchenbach, Helmut, Dipl.-Ing., Eibenweg 11,
D-4005 Meerbusch (DE)

(54) Monolithisches Plattenelement.

(57) In einem Plattenelement (1) mit von Innenliner (5) umgebenden Hohlkammern (4) ist in den Kunststoff ein räumliches Netzwerk (3) als Gerüst eingebaut.

EP 0 184 728 A2

0184728

BAYER AKTIENGESELLSCHAFT     5090 Leverkusen, Bayerwerk
Konzernverwaltung RP
Patentabteilung              Kr/bo/c      11. DEZ. 1984


Monolithisches Plattenelement
_____


Die Erfindung betrifft ein monolithisches Plattenelement aus Kunststoff mit Verstärkung aus Fasern, bestehend aus Platten, die über Verbindungen auf Abstand gehalten werden.


Bekannt sind extrudierte Hohlkammerplatten, bei denen der Kunststoff durch Fasern, insbesondere Glasfasern, verstärkt ist.


Beim Extrudieren des Kunststoffes bilden sich durch die Strömungsvorgänge in der Düse zwangsweise Vorzugsrichtungen bei den Fasern aus, die nicht unbedingt mit dem Kräfteverlauf bei der Belastung der Hohlkammerplatten übereinstimmen. Auch ist die Verteilung der Fasern ungleichmäßig, so daß eine Anisotropie im Material vorliegt, was zu Schwankungen in den Materialeigenschaften führt. Darüber hinaus ist die Gefahr der Zerkleinerung durch die Schnecken groß, so daß die Fäden wegen der erforderlichen Verankerungslängen kaum oder nur auf kurzen Strecken wirken. Alle diese Nachteile reduzieren also die Festigkeit und damit die Einsetzbarkeit der Hohlkammerplatte erheblich.


Le A 21 795

Der Erfindung liegt die Aufgabe zugrunde, eine Hohlkammerplatte zu finden, die eine weitgehende Ausnutzung der speziellen Eigenschaften von Kunststoff und Verstärkungen erlaubt, um eine feste, rissefreie Hohlkammerplatte mit geringem Materialaufwand zu erzielen.

Die Aufgabe wird erfindungsgemäß dadurch gelöst, daß mindestens in einem Teil der Platten und Verbindungen ein durchgehendes räumliches Netzwerk als Verstärkung eingebaut ist.

Durch das durchgehende räumliche Netzwerk in der Kunststoffmatrix, was hier als monolithische Bauweise bezeichnet wird, entsteht eine integrale Hohlraumplatte, die gegenüber den Lasten als geschlossenes räumliches System wirkt. Die Tragfähigkeit einer solchen Platte ist dadurch sehr hoch, wobei durch gezielten örtlichen Einbau von Verstärkungen noch evtl. dort auftretende Spannungsspitzen abgebaut werden können.

In einer besonderen Ausführungsform bildet das Netzwerk ein in Kunststoff eingebettetes Gerüst für eine Hohlkammerplatte mit gleicher Dicke und mindestens teilweise durchgehenden Stegen als Verbindungen.

Diese Hohlkammerplatte kann als standardmäßiges Bauteil eingesetzt werden, denn es zeichnet sich durch hohe Festigkeit aus, welche sich beispielsweise durch balkenartige Steganätze an einer Plattenseite noch erhöhen läßt. Auch können durch hin und her laufende Stege je

Le A 21 795

- 3 -

0184728

nach Anordnung quer zur oder in der Plattenebene bessere Verteilungen der Kräfte und damit höhere Festigkeiten in bestimmten Richtungen erzielt werden.

In einer anderen Ausführungsform sind die parallelen durchgehenden Hohlräume von Innenliner umgeben.

Diese Innenliner haben den Vorteil, daß sie einerseits als Form während der Herstellung verwendet werden können und andererseits durch entsprechende Wahl des Werkstoffes als Leitungen (Heizung, Solardach, etc.) für aggressive Medien dienen können.

In einer Ausführungsform sind die Verstärkungen mindestens teilweise vorgespannt.

Durch die Vorspannung, die beispielsweise durch Aufblasen der Innenliner aufgebracht werden kann, können Zugspannungen, die leicht zu Rissen und Korrosion führen, leichter vermieden werden.

Die Herstellung einer Hohlkammerplatte ist einfach. Zunächst wird ein Netzwerk aus Fasern in einem oder mehreren Arbeitsgängen mit der gewünschten Länge und Breite hergestellt, wobei ein oder mehrere Folien-Schläuche als Innenliner gleichzeitig in die späteren Zwischenräume eingelegt werden. Dieses Netzwerk wird im zusammengelegten Zustand mit Polymeren getränkt. Anschließend wird das vorgefertigte Teil auf seine endgültige Form gebracht, indem die eingelegten Folien-Schläuche aufgeblasen werden.

Le A 21 795

Bei Bedarf wird die Hohlkammerplatte beim Aufblasen zwischen zwei Formplatten geführt, die den äußeren Deckschichten die gewünschte Form geben. Die Hohlkammerplatte härtet in diesem Zustand aus bzw. erstarrt. Auch kann das Netzwerk mit Kunststoff in eine allseitig geschlossene Form überführt werden, wo die Folien-Schläuche anschließend aufgeblasen werden und der Kunststoff aushärtet.

Auch ist es möglich, aus faserförmigen Werkstoffen für Verstärkung und Kunststoff (Matrix) ein Netzwerk-Halbzeug zu fertigen, welches im nächsten Arbeitsgang durch mindestens teilweises Verflüssigen der Werkstoffe (beispielsweise durch Wärmezufuhr mittels Strahlung und/oder Lösungsmittel) zum Fertigteil verarbeitet wird.

Eine zwei- oder dreidimensionale Verformung des monolithischen Plattenelements ist möglich, z. B. in Presswerkzeugen.

Die Erfindung ist in den Zeichnungen dargestellt und wird im folgenden näher erläutert:

Es zeigen:

Fig. 1 Monolithisches Plattenelement mit durchgehendem räumlichen Netzwerk als Verstärkung

Fig. 2 Monolithisches Plattenelement in Form einer Hohlkammerplatte

Le A 21 795

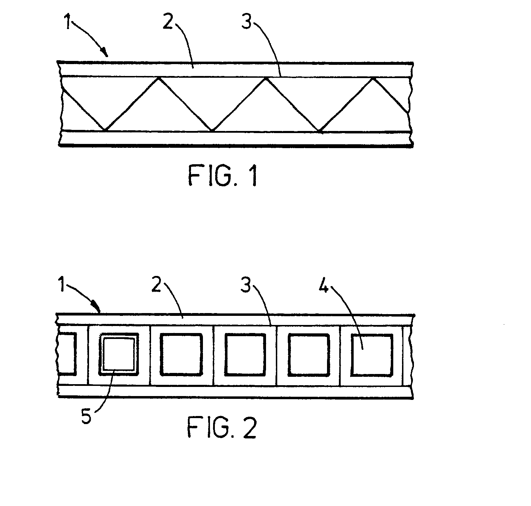

In Fig. 1 ist ein monolithisches Plattenelement 1 dargestellt, welches aus einem Kunststoff 2 und einer Verstärkung 3 in Form eines durchgehenden räumlichen (dreidimensionalen) Netzwerkes besteht.

In Fig. 2 ist ein monolithisches Plattenelement in Form
einer Hohlkammerplatte 1 dargestellt, welches aus einem
Kunststoff 2, einer Verstärkung 3 in Form eines durchgehenden räumlichen Netzwerkes und Hohlkammern 4 besteht, die mit Innenliner 5 ausgefüllt werden können.

<u>Le A 21 795</u>

## Patentansprüche

1) Monolithisches Plattenelement aus Kunststoff mit Verstärkung aus Fasern, bestehend aus Platten, die über Verbindungen auf Abstand gehalten werden, dadurch gekennzeichnet, daß mindestens in einem Teil der Platten und Verbindungen ein durchgehendes räumliches Netzwerk als Verstärkung eingebaut ist.

2) Monolithisches Plattenelement nach Anspruch 1, dadurch gekennzeichnet, daß das Netzwerk ein im Kunststoff eingebettetes Gerüst für eine Hohlkammerplatte gleicher Dicke mit mindestens teilweise durchgehenden Stegen als Verbindungen bildet.

3) Monolithisches Plattenelement nach Ansprüchen 1 - 2, dadurch gekennzeichnet, daß die parallelen durchgehenden Hohlräume von Innenliner umgeben sind.

4) Monolithisches Plattenelement nach Ansprüchen 1 - 3, dadurch gekennzeichnet, daß die Verstärkungen mindestens teilweise vorgespannt sind.

Le A 21 795

0184728
1/1

FIG. 1

FIG. 2